# EUROPEAN PATENT SPECIFICATION

(11) **EP 1 279 983 B1**
(45) Date of publication and mention of the grant of the patent: **28.12.2005**
(21) Application number: 01402021.8
(22) Date of filing: 26.07.2001
(51) Int. Cl.: G02B 6/44

(54) **Optical fibre ribbon**
Optisches Faserbändchen
Ruban de fibres optiques

(43) Date of publication of application: 29.01.2003
(73) Proprietor: Draka Comteq B.V., 1021 JZ Amsterdam (NL)
(72) Inventor: Rabate, Patrice, 95120 Ermont (FR); Vanpoulle, Sophie, 91190 Gif sur Yvette (FR); Andrieu, Xavier, 91120 Bretigny sur Orge (FR); Cariou, Frederic, 91380 Chilly Mazarin (FR)
(74) Representative: Blokland, Arie

(56) References cited:
- EP-A- 0 708 118
- US-A- 5 208 889
- US-A- 5 276 759
- US-A- 5 502 287
- US-A- 5 981 064
- US-A- 5 990 267
- US-B1- 6 175 677

## Description

The present invention relates to optical fibre cables. More particularly, the invention relates to a multiplicity of optical fibres configured as a flat ribbon cable and surrounded by a common exterior sheath, which are currently widely used in the telecommunications field to transmit information.

In general, a ribbon of optical fibres is made with a multiplicity of optical fibres arranged parallel to each other. The optical fibres will be considered to be "adjacent" one another.

Thus, optical fibre ribbon optic are presently being made employing a plurality of optical fibres, each fibre having a circumscribing single or multi-layered coat from an ultraviolet light (UV) curable resins, such as UV acrylates. Providing a plurality of coated optical fibres from a pay-off station and arranging the plurality in planar arrays makes the optical fibre ribbon.

U.S. Pat. No. 5,208,889 to Cedrone et al. describes an optical fiber ribbon cable in which a multiplicity of optical fiber are cabled together within a jacket of dielectric material. The cable is formed of sheets of unsintered PTFE or unsintered expanded PTFE or unsintered porous expanded PTFE around the optical fibers, and the PTFE is sintered at the end of the cabling process. In a high-temperature embodiment, the sheets of PTFE insulation may be extruded from emulsion prepared fine PTFE fine particles. Then the sheets are placed around the optical fibers and the resulting ribbon cable is heated to fully sinter the PTFE to full density PTFE insulation.

U.S. Pat No. 5,276,759 to Nguyen et al.describes a flat cable comprising a plurality of insulated conductors bonded to a porous substrate. The conductor may be an optical fiber surrounded by a layer of polymeric material. The surface of the porous substrate is impregnated with a polymeric material. The polymeric material may be applied in any convenient manner such as in a form of a solution, slurry or emulsion. The substrate and/or the conductors are then heated to about the melting point of the impregnating polymeric material iust prior to bringing the conductors and substrate into contact.

Another method of ribbon making is the following. The planar arrays of optical fibres are passed through a ribbon die wherein an UV curable primary matrix ribbonizing layer material is coated there over to form uncured enveloping layers over the planar arrays of fibres.

The planar arrays, having the uncured enveloping layers are passed through one or more UV curing light sources which cause the UV curable matrix material to cure into cured primary matrix ribbonizing layers so forming the optical fibre ribbon members which are adjacent and lie in the same plane.

The optical fibre ribbon members are passed through a ribbon die wherein a UV curable secondary matrix layer material is coated over the primary matrix ribbonizing layers to form uncured enveloping layer over the primary matrix layers. The secondary matrix material layer is cured by passing it through one or more UV curing light sources which cause the UV curable matrix material to cure into the secondary matrix ribbonizing layer so forming the ribbon optical fibre. For instance, see U.S. Pat. No. 6,175,677 to Yang et al..

As shown in Yang et al., an UV curable resins are used, the liquid resins are applied on the surface optical fibres and then the curing process is applied to coating deposited on the surface of the optical fibres.

As a consequence, a need exists for less expensive coatings for optical fibre ribbon. This is, to reduce the production costs of optical fibre ribbon, for example through a modification in the curing process of the composition used to coat the optical fibre ribbon.

In order to overcome the drawbacks mentioned above, the present invention provides for a method of manufacture of an optical fibre ribbon having a plurality of coated optical fibres as defined in claim 1.

The emulsion polymer used in the invention can be an acrylate polymers, fluoro polymers or the like.

In the present invention, a plurality of coated optical fibres (12) are guided through a ribbon die fed by one or more emulsion polymer. In one embodiment, the emulsion polymer coated optical fibres (13) are exposed to an in-line drying process.

In the invention, an optical fibre ribbon is made substantially in the same manner and having the same structure as a prior art optical fibre ribbon with one important distinction, instead of using an UV curable secondary matrix layer for enveloping the coating optical fibres, theses are enveloped by an emulsion polymers as acrylate polymers, fluoro polymers or the like.

Using emulsion polymers is less expensive because of the cost of the furnace which is less expensive than UV furnace, the cost of the raw material also is less expensive than UV curable resin. Therefore, the overall cost of the manufacturing process is less expensive than UV curing process.

A more detailed explanation of the invention is given in the following description based on the attached drawing in which:

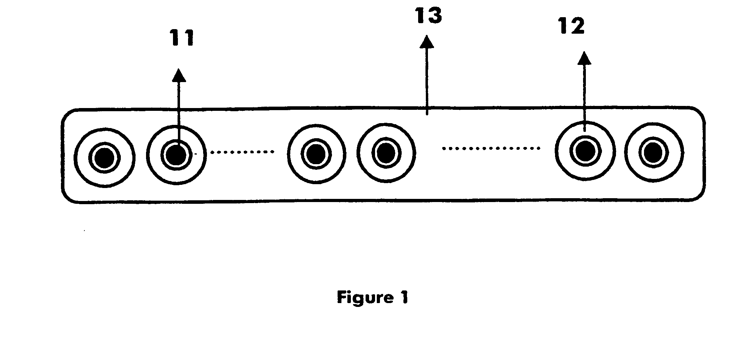

Figure 1 a cross sectional view of a fibre optic ribbon in according to an embodiment of the invention.

Figure 1 depicts the structure of an embodiment of the optical fibre ribbon or cable 13. The structure of the optical fibre ribbon 13 comprises a plurality of single or multi-layered optical fibres 12 aligned relative to one another in a planar relationship. Material as UV curable resin or the like coats each optical fibre 11. In general, the optical fibres 11 are passed through an ultraviolet UV acrylate material that cures under UV exposure.

The optical fibre ribbon 13 is made feeding a plurality of coated optical fibres 12 from a pay-off station and arranging the plurality in planar arrays. The planar arrays of coated optical fibres 12 are passed through a ribbon die that applies an emulsion polymer matrix to the coated optical fibres 12.

Following, the polymer coated optical fibre 13 is exposed to drying process by a furnace. The drying process dries and coalesces the emulsion polymer that offers excellent mechanical properties such as resistance to abrasion, to scratching, to humidity, and the like such as acrylate polymers, fluoro polymers as fluorinated ethylene-propylene copolymers (FEP), perfluoroalkyl ethers of polytetrafluoroethylene (PTFE) polymers, or the like surrounds the optical fibres. The emulsion polymer matrix 13 envelops the polymer coated optical fibres 12.

It will be noted that the structure of the optical fibre ribbon 13 is a plurality of single or multi-layered optical fibres circumscribed by a protective sheath, for instance emulsion polymer.

As a consequence, the coating composition useful for coating optical fibre has mechanical characteristics similar to other compositions used for the same purpose and that are subjected to other processes, such as UV curing method.

In fact, the manufacturing process of the invention is less costly due to the low cost of the emulsion polymers, a lot of different families of emulsion polymers can be used, for example some acrylate polymers that provides interesting low modulus characteristics.

It can be seen from the foregoing disclosure and series of examples that the present invention offers substantial advantages.

## Claims

1. Method of manufacture of an optical 1 fibre ribbon (13) comprising a plurality of coated optical fibres (12) circumscribed by a protective sheath **characterised in that** said coated optical fibres (12) are guided through a ribbon die fed by one or more emulsion polymers wherein an emulsion polymer matrix is applied to said coated optical fibres (12) and the emulsion polymer being subsequently dried and coalesced to form said protective sheath, whereby the ribbon (13) is formed, comprising said coated optical fibres (12) circumscribed by said protective sheath.

2. Method according to claim 1, wherein said coated optical fibres (12) are arranged in planar arrays.

3. Method according to one of claims 1-2, wherein the emulsion polymer coated optical fibres (12) are exposed to an in-line drying process.

4. Method according to one of the preceeding claims, wherein the emulsion polymer is an acrylate polymer or a fluoro polymer.

## Patentansprüche

1. Verfahren zum Herstellen eines Lichtwellenleiterbands (13) mit einer Mehrzahl von beschichteten Lichtwellenleitern (12), die von einer Schutzhülle umgeben sind, **dadurch gekennzeichnet, dass** die beschichteten Lichtwellenleiter (12) durch eine Bandmatrize geführt werden, der ein oder mehrere Emulsionspolymer(e) zugeführt werden, wobei eine Emulsionspolymer-Grundsubstanz auf die beschichteten Lichtwellenleiter (12) aufgebracht wird und das Emulsionspolymer nachfolgend getrocknet und verbunden wird, um die Schutzhülle zu bilden, wodurch das Band (13) gebildet wird, das die beschichteten Lichtwellenleiter (12) aufweist, die von der Schutzhülle umgeben sind.

2. Verfahren nach Anspruch 1,wobei die beschichteten Lichtwellenleiter (12) in flachen Anordnungen angeordnet sind.

3. Verfahren nach einem der Ansprüche 1 bis 2, wobei die mit einem Emulsionspolymer beschichteten Lichtwellenleiter (12) einem Inline-Trocknungsprozess unterzogen werden.

4. Verfahren nach einem der vorhergehenden Ansprüche, wobei das Emulsionspolymer ein Acrylatpolymer oder ein Fluorpolymer ist.

## Revendications

1. Procédé de fabrication d'un ruban de fibres optiques (13) comprenant une pluralité de fibres optiques revêtues (12) circonscrites par une gaine de protection, **caractérisé en ce que** lesdites fibres optiques revêtues (12) sont guidées à travers une filière en ruban alimentée par un ou plusieurs polymères en émulsion, où une matrice de polymère en émulsion est appliquée auxdites fibres optiques revêtues (12) et le polymère en émulsion est ensuite séché et coalescé pour former ladite gaine de protection, moyennant quoi le ruban (13) est formé, lequel comprend lesdites fibres optiques revêtues (12) circonscrites par ladite gaine de protection.

2. Procédé selon la revendication 1, dans lequel lesdites fibres optiques revêtues (12) sont arrangées en réseaux plans.

3. Procédé selon l'une des revendications 1 et 2, dans lequel les fibres optiques revêtues par le polymère en émulsion (12) sont exposées à un processus de séchage en temps réel.

4. Procédé selon l'une des revendications précédentes, dans lequel le polymère en émulsion est un polymère acrylique ou un polymère fluoré.
